# EUROPEAN PATENT SPECIFICATION

(11) **EP 3 204 563 B1**
(45) Date of publication and mention of the grant of the patent: **25.11.2020**
(21) Application number: 15800955.5
(22) Date of filing: 06.10.2015
(51) Int. Cl.: E04B 1/16, E04G 11/08, E04B 5/32, C04B 28/12, C04B 18/02

(54) **A PROCESS FOR MAKING A BUILDING STRUCTURE AND A BUILDING STRUCTURE OBTAINED BY MEANS OF SUCH PROCESS USING A LIGHT CONGLOMERATE COMPRISING A GRANULAR INERT MATERIAL, VEGETABLE FIBRES AND HYDRAULIC LIME**
VERFAHREN ZUR HERSTELLUNG EINER GEBÄUDESTRUKTUR UND DURCH SOLCH EIN VERFAHREN HERGESTELLTE GEBÄUDESTRUKTUR UNTER VERWENDUNG EINES LEICHTEN KONGLOMERATS MIT GRANULÖSEN INERTEN MATERIALIEN, PFLANZLICHEN FASERN UND HYDRAULISCHEM KALK
PROCÉDÉ DE FABRICATION DE STRUCTURE DE BÂTIMENT, ET STRUCTURE DE BÂTIMENT OBTENUE AU MOYEN D'UN TEL PROCÉDÉ UTILISANT UN CONGLOMÉRAT DE LUMIÈRE COMPRENANT DES MATÉRIAUX INERTES GRANULAIRES, DES FIBRES VÉGÉTALES ET DE LA CHAUX HYDRAULIQUE

(30) Priority: 06.10.2014 IT TO20140794
(43) Date of publication of application: 16.08.2017
(73) Proprietor: Nidus S.r.L, 12030 Scarnafigi (CN) (IT)
(72) Inventor: DEMARCHI, Efrem, 81052 Pignataro Maggiore (IT)
(74) Representative: Giannini, Manuela
(86) International application number: PCT/IB2015/057638
(87) International publication number: WO 2016/055936

(56) References cited:
- EP-A2- 2 093 201
- GB-A- 2 473 032
- MORGAN CHABANNES ET AL: "Design and multi-physical properties of a new insulating concrete using sunflower stem aggregates and eco-friendly binders", MATERIALS AND STRUCTURES, vol. 48, no. 6, 27 March 2014 (2014-03-27) , pages 1815-1829, XP055194686, ISSN: 1359-5997, DOI: 10.1617/s11527-014-0276-9
- V. NOZAHIC ET AL: "Design of green concrete made of plant-derived aggregates and a pumice-lime binder", CEMENT AND CONCRETE COMPOSITES, vol. 34, no. 2, 1 February 2012 (2012-02-01), pages 231-241, XP055194682, ISSN: 0958-9465, DOI: 10.1016/j.cemconcomp.2011.09.002
- TAI-THU NGUYEN ET AL: "Influence of compactness and hemp hurd characteristics on the mechanical properties of lime and hemp concrete", EUROPEAN JOURNAL OF ENVIRONMENTAL AND CIVIL ENGINEERING, vol. 13, no. 9, 1 October 2009 (2009-10-01), pages 1039-1050, XP055194690, ISSN: 1964-8189, DOI: 10.1080/19648189.2009.9693171

## Description

### TECHNICAL FIELD

The present invention relates to a process for making a building structure, in particular for making a vertical wall or a floor.

### BACKGROUND ART

The use on building sites of prefabricated slabs to build curtain walls is known in the construction industry. For example, prefabricated slabs are known in the prior art which comprise two panels made of wood with a space between them; a filling material with thermal insulation properties is inserted inside the space between the two panels; and a number of uprights made of wood are buried in the filling material.

However, such solutions are not satisfactory, as they are not rigid enough to perform a load bearing function in addition to a curtain wall function. Moreover, owing to the two panels which define the opposite faces of the prefabricated slab, the wall obtained with said slab has poor breathability and is not flame retardant.

Besides, from a construction point of view, it would be preferable to carry out as much work as possible directly on the building site, using local workers, rather than using prefabricated elements.

Document EP0125936A1 describes a wall similar to the panels described above, but which is built directly on the building site, instead of being prefabricated. In particular, the wall is made by mounting a frame made of wood, which has a front panel and a rear panel, with uprights and beams arranged between said panels. A lower beam is fixed to a base by means of plugs. Once the frame has been mounted, a fluid insulating product is poured between the two panels, burying the uprights and the beams. Said product consists of a foam or hardening paste, and obtains a single-piece structure with excellent thermal and sound insulation properties and presumably high rigidity.

However, EP0125936A1 does not describe the specific characteristics and/or the composition of the product used to obtain the desired rigidity, and so does not teach how to overcome the problems of making the aforesaid prefabricated panels capable of bearing loads. Moreover, the wall described in EP0125936A1 has relatively low breathability and is not flame retardant, owing to the front panel and the rear panel which are incorporated into the wall thus obtained.

GB2473032 discloses an in situ method for constructing a lightweight aggregate concrete structure. The method comprises erecting an internal frame to define a front face and a rear face; inserting tie-rods through cement sheets and then fitting external bracing elements to the rods; attaching the cement sheets to the internal frame so as to create a cavity between the sheets; injecting a lightweight aggregate concrete slurry into the cavity; removing the external bracing elements and tie-rod after the slurry has set.

EP2093201 discloses a lime foam composition comprising: at least 65 wt.% (preferably 70-90 wt.%) of natural hydraulic lime, or at least 65 wt.% (preferably 70-90 wt.%) of a mixture comprising natural hydraulic lime and cement; 0.5-10 wt.% of fibers (preferably vegetable fibers); 1-2.5 wt.% of at least one foaming agent; and 100-200 wt.% of water.

### DISCLOSURE OF INVENTION

The purpose of the present invention is to provide a process for making a building structure, which overcomes the problems described above in a simple and cost-effective manner, and which preferably uses relatively lightweight materials and makes it possible to avoid so-called "heat bridges" in the structure. In particular, it would be preferable to allow some freedom of choice and discretion in the production of systems and/or finishes, to make a wooden skeleton, for example in the form of a cage, in a simple and fast manner, and to use biocompatible materials, in order to meet green building requirements and replace the conventional use of reinforced concrete.

According to the present invention, there is provided a process as set forth in claim 1.

The present invention also relates to a building structure as set forth in claim 14.

### BRIEF DESCRIPTION OF THE DRAWINGS

The present invention will now be described with reference to the accompanying drawings, illustrating a nonlimiting embodiment thereof, in which:
- figures 1 and 2 are perspective views illustrating the steps of a preferred embodiment of the process for making a building structure according to the present invention;
- figure 3 shows a skeleton made of wood which defines an alternative embodiment with respect to that illustrated in figures 1 and 2, to obtain the building structure according to the teachings of the present invention;
- figures 4 to 6 illustrate some details of the wooden skeleton shown in figure 3, with some parts disconnected for the sake of clarity; and
- figure 7 is similar to figure 6 and illustrates an alternative embodiment of the process shown in figures 1 and 2.

### BEST MODE FOR CARRYING OUT THE INVENTION

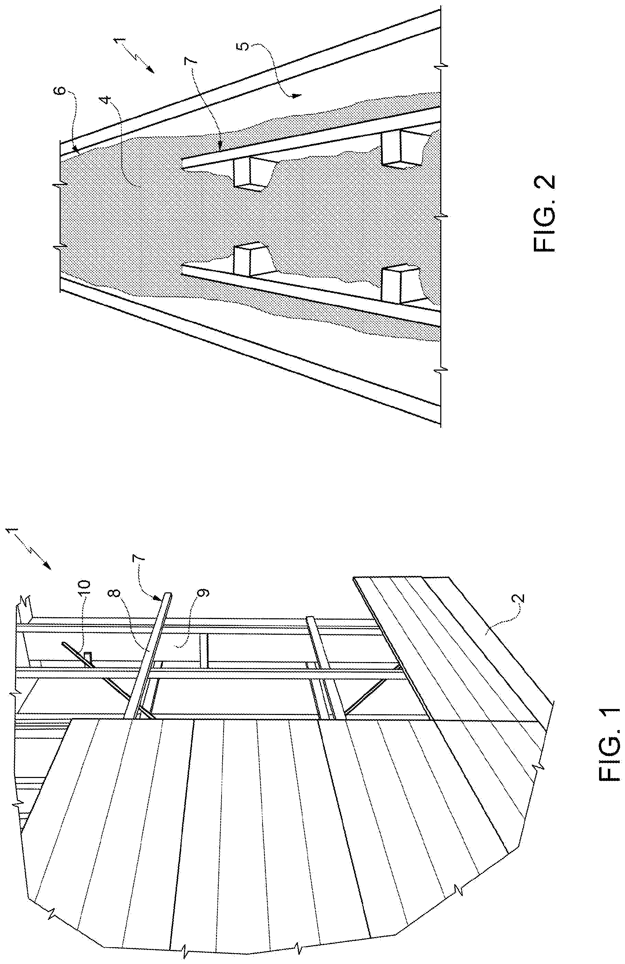

In figures 1 and 2, a formwork (partially illustrated) is denoted as a whole by reference numeral 1, and is mounted at the building site on a base or platform 2, previously produced and made waterproof. Once the formwork 1 has been mounted (fig. 2), it defines a housing or internal space 5, which is open at the top so that a lightweight conglomerate 4, described in detail later on in this document, can be poured in from the top.

According to one aspect of the present invention, before or during the construction of the formwork 1, a skeleton 7, preferably in the form of a cage, is mounted inside the space 5 into which the lightweight conglomerate 4 is to be subsequently poured. Moreover, the material of at least some parts of the skeleton 7 is wood, to meet the requirements of green building.

As illustrated in figure 1, once mounted, the skeleton 7 is fixed to the base 2 in a manner that is not illustrated and comprises a network 8 of beams and uprights.

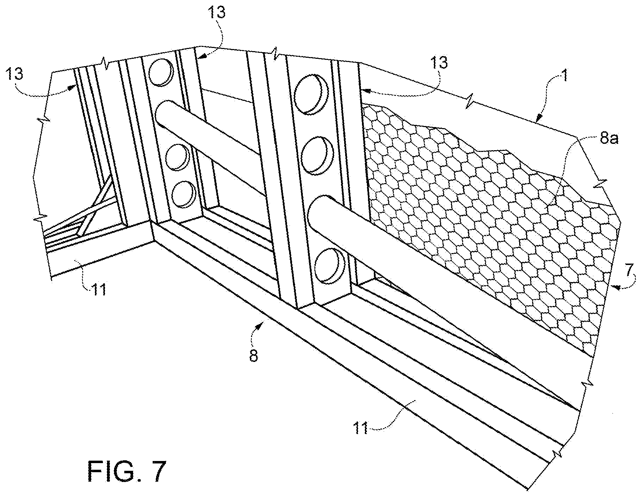

According to the alternative embodiment in figure 7, the skeleton 7 comprises at least a grid 8a, defined by a honeycomb cardboard panel, netting or other similar perforated elements, it is vertical and is arranged between the network 8 and a wall of the formwork 1. The purpose of the grid 8a is to improve the adhesion of the mixture that is poured into the formwork 1.

In the specific case illustrated in figure 1, the skeleton 7 further comprises at least two posts 9 (only one of which is visible) the cross-section of which is greater than the elements of the network 8. The posts 9 have respective feet (not illustrated) which are screwed or plugged to the base 2 and support the network 8 to hold said network 8 still when the lightweight conglomerate 4 is poured in. In particular, a bracing system 10 of a type known in the prior art is provided to stiffen the network 8. In the specific case, the bracing system 10 is defined by metal rods.

As illustrated in figure 2, during pouring, the skeleton 7 and the bracing system 10, if provided, are completely buried in the lightweight conglomerate 4. The pouring step may be followed by a compacting step.

The lightweight conglomerate 4 gradually dries and, as it does so, it sets and hardens. A vertical wall 6 is thus obtained on the base 2 directly on the building site. After a previously defined time, for example 2-3 days, the lightweight conglomerate 4 is hard enough for the wall 6 to form a compact block and stand unsupported on the base 2. At this point, the formwork 1 can be removed. The methods of constructing and of removing the formwork 1 are known in the prior art and are therefore not described in detail here for the sake of conciseness.

During the mounting of the skeleton 7 the wooden elements thereof may be arranged at a distance from the inside surfaces of the formwork 1: in that case, the wooden elements will be surrounded by the lightweight conglomerate 4. In particular, the grid 8a mentioned earlier (figure 7) is appropriately provided, and must have suitable characteristics so as not to prevent the lightweight conglomerate 4 from reaching the wall of the formwork 1. In this case, that is to say, when the wooden elements are arranged at a distance from the formwork 1, the conventional and so-called "chasing" to house and/or carry hydraulic and/or electrical systems (conduits, wiring, pipes, etc.) can be obtained in the faces of the wall 6 without damaging the wood of the skeleton 7.

Alternatively, the wooden elements of the skeleton 7 may be arranged to come into contact with at least one of the inside surfaces of the formwork 1 (in which case they will be substantially flush with the faces of the wall 6 that is obtained).

The inside surfaces of the formwork 1 may be smooth, in order to obtain corresponding smooth faces on the wall 6 (for example in order to lay tiles directly on an appropriate levelling mesh made of vegetable fibres, or other covering elements without plaster). Alternatively, the inside surfaces of the formwork 1 may be textured or corrugated, in order to make the faces of the wall 6 rough and so improve the setting capacity of the plaster, after laying a vegetable fibre plaster mesh. In any case, as mentioned previously, ample freedom is allowed in the choice of methods and equipment used to produce the formwork 1.

As mentioned earlier, according to the alternative embodiment illustrated in figure 7 in which the grids 8a have been fitted, the latter support the lightweight conglomerate 4 during pouring and limit any cracking and splitting during the drying step. Moreover, the grids 8a defined by cardboard panels help the lightweight conglomerate 4 to dry, in that they transfer the humidity to the outside more quickly.

The present invention relates to the combined use of the skeleton 7 and the lightweight conglomerate 4, which is defined by a mixture of water and an aggregate, which comprises three components and also additives.

The first component is a granular mineral inert material defined by one, or a mixture, of the following materials:
- expanded perlite,
- expanded vermiculite;
- pumice;
- clay.

Preferably, for the first component particles of different sizes are used, that is to say, particles having a relatively broad range of sizes, in order to make the aggregate suitable for different project requirements. In particular, the mixture of particle sizes of the inert material is comprised between 0.5 mm and 6 mm. Preferably, the mixture contains more material having larger particle sizes, in that this allows the lightweight conglomerate 4 to dry more quickly.

The inert material gives the lightweight conglomerate 4 and, thus, the wall 6, the following characteristics: low thermal conductivity and thus good thermal insulation; good flame and heat resistance; chemical inertness; good sound absorption and thus a high level of sound insulation.

Preferably, the inert material is defined by perlite only, in that the latter is lighter than clay and pumice, more resistant that vermiculite and relatively economical.

The second component is a binder comprising hydraulic lime. Here and in the description that follows, the term "hydraulic lime" is used to refer to hydraulic lime in the strict sense as well as eminently hydraulic lime. Hydraulic lime sets and hardens when combined with water, thus acting as a binder.

Preferably, the hydraulic lime is natural hydraulic lime, in that the latter makes it possible to obtain a binder with relatively high porosity, good mechanical resistance at medium and long curing times and is naturally insulating.

Alternatively, the binder (second component) consists of a mixture of hydraulic lime and cement, preferably with an approximate composition of 2/3 hydraulic lime and 1/3 cement. Besides representing a more economical solution, the use of this amount of cement added to the hydraulic lime improves the mechanical resistance of the binder.

The third component is defined by vegetable fibres having at least one hygroscopic material. This material, in addition to any weight lightening properties, has the main function of absorbing water and thus making the lightweight conglomerate 4 thicker for pouring and limiting shrinkage during drying.

Preferably, this third component consists of wood dust and/or fragments and hemp, kenaf and/or jute fibres. These materials are readily available and relatively economical. The wood dust, fragments and/or powder make it possible to thicken the mixture to be poured, as described above. The filaments of hemp, kenaf and/or jute perform an additional strengthening function. In particular, the size of the wood particles is comprised between 0.1 and 12 mm Advantageously, the hemp, kenaf or jute filaments are between 30 and 60 mm in length.

As mentioned previously, the aggregate comprises the three components listed above and some additives. In particular, the additives consist of one of the following materials or a mixture thereof:
- Sodium silicate, which makes the various components bind more quickly and is a hardening agent;
- Starch, which binds the vegetable fibres together and thus increases mechanical resistance;
- Fluxing material.

This fluxing material may consist of lime putty, or an equivalent product in powder form, which is added to the aggregate when preparing the mixture with water. The lime putty (or equivalent component in powder form), also carbonates quickly, thus improving the durability and resistance of the lightweight conglomerate 4.

To prepare the lightweight conglomerate 4, the aggregate is supplied in bags, with the various components already pre-mixed, so that to obtain the lightweight conglomerate 4 all that is required at the building site is to add water and, where applicable, lime putty.

As regards the preferred composition in weight of the components listed above, appropriate tests should be carried out to define their doses in the best way, based on the specific factors of use. The aggregate described above has the following composition:
- from 25.5 % to 34.5 % of mineral inert material;
- from 42.5 % to 57.5 % of binder;
- from 8.5% to 11.5% of vegetable fibre hygroscopic material;
- from 8.5 % to 11.5 % of additives (of which between 3% and 6% of fluxing material).

As for the mixture, between 15 and 20 litres of water must be added for each quantity of 33.3 litres of aggregate.

Using the composition described above, test specimens of the hardened mixture were prepared after 60 days, and thus test specimens of the wall, on which tests were carried out to determine the compressive strength and thermal insulation.

The results were as follows:
- compressive strength of the wall (after 60 days) greater than 1.5 MPa (tests in accordance with Italian Ministerial Decree of 14/01/2008, UNI EN 12390/1 - UNI EN 12390/3)
- thermal conductivity of the wall less than or equal to 0.09 W/mK (tests in accordance with ISO 9869).

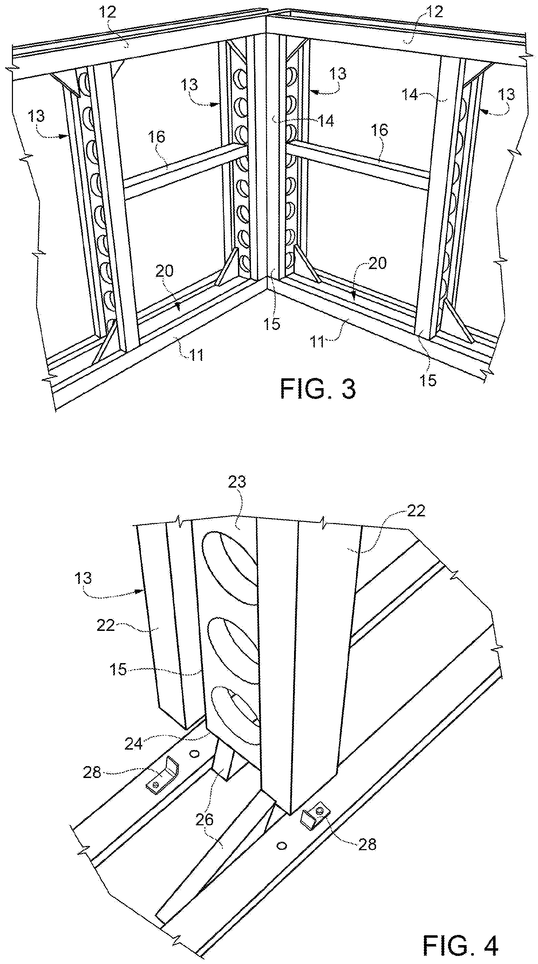

With regard to the skeleton 7, figures 3 to 6 illustrate a possible alternative embodiment of that illustrated in figure 1, to facilitate, simplify and speed up its assembly. In this case, the skeleton 7 comprises at least a lower beam 11 and at least an upper beam 12, made of wood, preferably identical to one another and having a C-shaped cross-section, so as to define respective horizontal grooves 20. The beam 11 is suitable to be fixed to the base 2, for example by means of screws or plugs, it defines the support for the entire skeleton 7 and is mounted with the groove 20 facing upwards. The beam 12, on the other hand, is mounted with the groove 20 facing downwards.

The skeleton 7 further comprises at least two uprights 13 made of wood, identical to one another; and preferably at least a horizontal cross member 16, arranged at an intermediate height between the beams 11,12 and suitable to perform substantially the same function as the bracing system 10. The upper ends 14 and the lower ends 15 of the uprights 13 are fixed to the beams 11,12, respectively.

As shown in figure 4, the uprights 13 preferably have an I-shaped or an H-shaped cross-section, and thus each consist of two lateral elements 22 and an intermediate element 23. At both ends 14 and 15, the intermediate element 23 protrudes with respect to the lateral elements 22 so as to form respective appendices 24 which engage the grooves 20, substantially with no clearance in the horizontal direction orthogonal to the beams 11,12. To arrange each appendix 24 correctly in the desired position along the grooves 20, the appendix 24 is inserted between two reference blocks 26 made of wood, arranged within the grooves 20 and fixed to the beams 11,12. The distance between the two blocks 26 is equal to the thickness of the appendix 24, so that they hold the upright 13 still before it is fixed. In particular, fixing is performed by means of two L-shaped metal brackets, denoted by reference numeral 28, which are fastened by means of screws to the beams 11,12 and to the lateral elements 22 of the uprights 13.

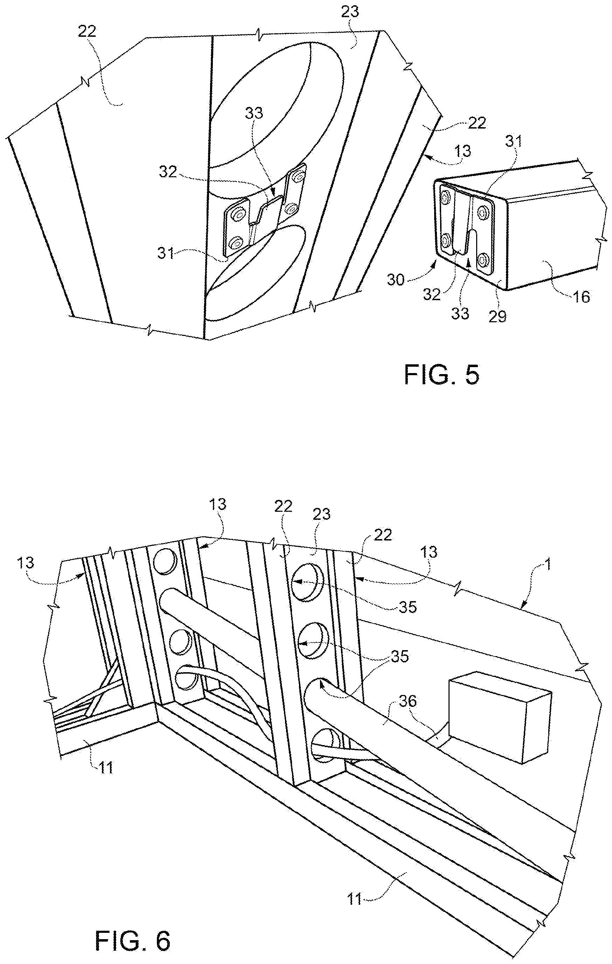

With reference to figure 5, the cross member 16 has two opposite lateral ends, denoted by reference numeral 29 and fixed to intermediate portions of the uprights 13. During the assembly of the skeleton 7, each end 29 is coupled to the upright 13 by means of a retaining device 30 and then fixed (by means of metal brackets and screws, not illustrated). The device 30 consists of two metal plates 31, which are identical to one another and are fixed, one to the tip of the end 29 and the other to the element 23 of the upright 13, with orientations rotated by 180° with respect to one another about the axis of the cross member 16. Each plate 31 comprises a vertical tongue 32 which is horizontally spaced from the face of the wood so as to form therewith a retaining seat 33 that is engaged by the tongue 32 of the other plate 31 by means of a vertical insertion.

With reference to figure 6, advantageously the uprights 13 are provided with a series of apertures 35, vertically spaced and obtained in the elements 23. In addition to making the uprights 13 lighter, the apertures 35 allow the lightweight conglomerate 4 to cooperate with the skeleton 7. At the same time, the apertures 35 allow hydraulic and/or electrical systems 36 (conduits, wiring, pipes, etc.) to be arranged within the space 5 in positions as defined in the project, before pouring the lightweight conglomerate 4. The number and the position of the apertures 35 allow for considerable freedom of choice in positioning the systems 36.

As can be seen in figures 3 and 6, during the assembly step the skeleton 7 can be made to follow an L-shaped path, by arranging two uprights 13 in adjacent positions and with an orientation rotated about a vertical axis, and coupling these two uprights 13 by means of angular metal brackets or metal hinges (not illustrated).

Thanks to the characteristics described above, the skeleton 7 can be mounted easily and quickly. In particular, the skeleton 7 is provided with positioning and retaining systems to facilitate the subsequent fixing of the wooden elements.

Regardless of the structural and construction characteristics of the skeleton 7, the combination of the latter with the lightweight conglomerate 4 means building structures can be made directly on the building site using materials that meet green building requirements, achieving good breathability performance, thermal and sound insulation and, at the same time, excellent resistance and load-bearing characteristics. In particular, the characteristics of the lightweight conglomerate 4, combined with the skeleton 7, give the wall 6 adequate load-bearing characteristics to bear the weight of an upper floor and/or of a roof, which means the process according to the present invention can advantageously be used for building low buildings, single-family houses, adding two or three floors to apartment blocks, etc.

Moreover, the wall 6 has good breathability and flame retardant properties, as there are no wooden panels on its faces and, at the same time, the lightweight conglomerate 4 covers and protects the wood of the skeleton 7. Good fire resistance properties are also achieved thanks to the type of inert materials used: for instance, perlite is practically fireproof (fire class A1). The wood dust and/or shavings contained in the aggregate described above have a negligible effect on fire resistance, as they are distributed in the other fireproof materials.

As mentioned previously, the use of wood, or similar hygroscopic cellulose material in the aggregate reduces, or may even eliminate, the shrinkage of the natural hydraulic lime during drying.

Furthermore, the building structure obtained using the process described above has no heat bridges, since the wood of the skeleton 7 and the materials in the aggregate, are insulating.

Besides, the characteristics of the skeleton 7 illustrated in figures 3 to 6 make it easy to assemble on the building site.

Other advantages will be apparent to the person skilled in the art on the basis of the description provided above.

From the above description it is clear that modifications and variations may be made to the process described herein with reference to the accompanying figures without departing from the scope of protection as defined in the appended claims.

In particular, the wall 6 could be built on a floor or on a raised platform, and not on a base 2 on the ground, for example to add a floor to an existing building.

The process could be used to build a floor or floor member, and thus a horizontal structure, instead of the wall 6: in that case, the space 5 provided for the skeleton 7 and for pouring the lightweight conglomerate 4 would not be defined by a formwork, but by a lower platform and lateral containment beams. The lower platform could be left in view, or removed once the lightweight conglomerate 4 has dried.

## Claims

1. A process for making a building structure (6), the process comprising the steps of:
a) providing a housing (5) which is open at the top;
b) mounting a skeleton (7) within said housing (5);
c) pouring a lightweight conglomerate (4) into said housing (5) so as to bury said skeleton (7);
d) letting said lightweight conglomerate (4) harden;
**characterized in that** said lightweight conglomerate (4) is obtained by mixing water with an aggregate comprising:
a) a granular mineral inert material comprising at least one component from the group consisting of:
• expanded perlite,
• expanded vermiculite,
• pumice,
• clay;
b) a binder comprising hydraulic lime;
c) vegetable fibres comprising hygroscopic material;
and **in that** the material of at least some parts of said skeleton (7) is wood;
said aggregate having the following composition in weight:
• from 25.5 % to 34.5 % of said mineral inert material;
• from 42.5 % to 57.5 % of said binder;
• from 8.5 % to 11.5 % of said vegetable fibres;
• from 8.5 % to 11.5 % of additives.

2. The process according to claim 1, **characterized in that** said inert material is defined by expanded perlite.

3. The process according to claim 1 or 2, **characterized in that** said binder is defined by a mixture of hydraulic lime and cement.

4. The process according to any one of the preceding claims, **characterized in that** said binder comprises natural hydraulic lime.

5. The process according to any one of the preceding claims, **characterized in that** said vegetable fibres comprise at least one component from the group consisting of:
a) cellulose;
b) jute:
c) kenaf;
d) hemp.

6. The process according to claim 5, **characterized in that** said vegetable fibres consist of a mixture of:
a) wood dust or fragments;
b) jute, kenaf and/or hemp fibres.

7. The process according to any one of the preceding claims, **characterized in that** said skeleton (7) comprises a network (8) of uprights and beams made of wood.

8. The process according to claim 7, **characterized in that** said housing (5) is defined by a formwork (1), which is removed after said lightweight conglomerate (4) has hardened.

9. The process according to claim 8, **characterized in that** said skeleton (7) further comprises at least a vertical grid (8a), which is arranged between said network (8) and a wall of said formwork (1) before the lightweight conglomerate (4) is poured.

10. The process according to claim 9, **characterized in that** said grid is defined by a honeycomb cardboard panel.

11. The process according to any one of the claims from 8 to 10, **characterized in that** said network (8) comprises:
a) a lower beam (11) and an upper beam (12);
b) at least two uprights (13) comprising respective lower and upper ends which are fixed to said lower and upper beams (11,12).
c) at least an intermediate cross member (16) arranged at an intermediate height between said lower and upper beams (11,12) and having two opposite lateral ends (29) which are fixed to intermediate portions of said uprights (13).

12. The process according to claim 11, **characterized in that** at least one of said lateral ends, before being fixed, is coupled to the corresponding upright by means of a retaining device (30) consisting of two metal plates (31), which are identical to one another and are fixed, one to the tip of said end (29) and the other to an element (23) of said upright (13), with orientations rotated by 180° with respect to one another about the axis of said intermediate cross member (16).

13. The process according to claim 11 or 12, **characterized in that** said uprights (13) have an I-shaped or an H-shaped cross section and each consist of two lateral elements (22) and of an intermediate element (23); at at least one of said upper and lower ends (14,15), said intermediate element (23) protrudes with respect to said lateral elements (22) so as to form an appendix (24) which engages a groove (20) in said upper or lower cross member.

14. A building structure (6) obtained according to the process as claimed in any one of the preceding claims and comprising:
a) a skeleton (7);
b) a hardened lightweight conglomerate in which said skeleton (7) is buried;
**characterized in that** said hardened lightweight conglomerate comprises:
a) a granular mineral inert material comprising at least one component from the group consisting of:
• expanded perlite,
• expanded vermiculite,
• pumice,
b) clay;
c) a binder comprising hydraulic lime;
d) vegetable fibres comprising hygroscopic material;
and **in that** the material of at least a part of the components of said skeleton (7) is wood.

15. The structure according to claim 14, **characterized in that** said skeleton (7) comprises a network (8) of uprights and beams made of wood.

16. The structure according to claim 15, **characterized in that** there are no wooden panels on its faces.

## Patentansprüche

1. Verfahren zum Herstellen einer Baustruktur (6), wobei das Verfahren folgende Schritte aufweist:
a) Bereitstellen eines Gehäuses (5), das oben offen ist;
b) Montieren eines Gerüsts (7) in dem Gehäuse (5);
c) Gießen eines leichten Konglomerats (4) in das Gehäuse (5), um das Gerüst (7) zu vergießen;
d) Aushärtenlassen des leichten Konglomerats (4);
**dadurch gekennzeichnet, dass** das leichte Konglomerat (4) durch Mischen von Wasser mit einem Aggregat erhalten wird, das aufweist:
a) ein körniges inertes mineralisches Material, aufweisend mindestens einen Bestandteil aus der Gruppe bestehend aus:
• expandiertem Perlit,
• expandiertem Vermiculit,
• Bimsstein,
• Lehm;
b) ein hydraulischen Kalk aufweisendes Bindemittel;
c) Pflanzenfasern, die ein hygroskopisches Material aufweisen;
und dadurch, dass das Material von mindestens einigen Teilen des Gerüsts (7) Holz ist; wobei das Aggregat die folgende Gewichtszusammensetzung aufweist:
• 25,5 % bis 34,5 % des inerten mineralischen Materials;
• 42,5 % bis 57,5 % des Bindemittels;
• 8,5 % bis 11,5 % der Pflanzenfasern;
• 8,5 % bis 11,5 % Additive.

2. Verfahren nach Anspruch 1, **dadurch gekennzeichnet, dass** das inerte Material durch expandiertes Perlit definiert ist.

3. Verfahren nach Anspruch 1 oder 2, **dadurch gekennzeichnet, dass** das Bindemittel durch ein Gemisch aus hydraulischem Kalk und Zement definiert ist.

4. Verfahren nach einem der vorstehenden Ansprüche, **dadurch gekennzeichnet, dass** das Bindemittel natürlichen hydraulischen Kalk aufweist.

5. Verfahren nach einem der vorstehenden Ansprüche, **dadurch gekennzeichnet, dass** die Pflanzenfasern mindestens einen Bestandteil aus der Gruppe bestehend aus:
a) Cellulose;
b) Jute;
c) Kenaf;
d) Hanf aufweisen.

6. Verfahren nach Anspruch 5, **dadurch gekennzeichnet, dass** die Pflanzenfasern aus einem Gemisch aus:
a) Holzstaub oder Holzfragmenten;
b) Jute-, Kenaf- und/oder Hanffasern bestehen.

7. Verfahren nach einem der vorstehenden Ansprüche, **dadurch gekennzeichnet, dass** das Gerüst (7) ein Netzwerk (8) aus Pfosten und Querträgern aus Holz aufweist.

8. Verfahren nach Anspruch 7, **dadurch gekennzeichnet, dass** das Gehäuse (5) durch eine Schalung (1) begrenzt ist, die nach dem Aushärten des leichten Konglomerats (4) entfernt wird.

9. Verfahren nach Anspruch 8, **dadurch gekennzeichnet, dass** das Gerüst (7) ferner mindestens ein vertikales Geflecht (8a) aufweist, das zwischen dem Netzwerk (8) und einer Wand der Schalung (1) angeordnet wird, bevor das leichte Konglomerat (4) gegossen wird.

10. Verfahren nach Anspruch 9, **dadurch gekennzeichnet, dass** das Geflecht durch eine Wabenkartonplatte begrenzt ist.

11. Verfahren nach einem der Ansprüche 8 bis 10, **dadurch gekennzeichnet, dass** das Netzwerk (8) aufweist:
a) einen unteren Querträger (11) und einen oberen Querträger (12);
b) mindestens zwei Pfosten (13), die jeweils ein unteres und ein oberes Ende aufweisen, welche an dem unteren und oberen Querträger (11, 12) befestigt sind;
c) mindestens einen Zwischenquerträger (16), der auf einer mittleren Höhe zwischen dem unteren und oberen Querträger (11, 12) angeordnet ist und zwei gegenüberliegende Seitenenden (29) aufweist, die an Mittelabschnitten der Pfosten (13) befestigt sind.

12. Verfahren nach Anspruch 11, **dadurch gekennzeichnet, dass** mindestens eines der Seitenenden vor dem Befestigen durch eine Rückhaltevorrichtung (30) aus zwei Metallplatten (31) mit dem jeweiligen Pfosten gekoppelt ist, wobei die Metallplatten identisch sind und in einer Ausrichtung von 180° zueinander um die Achse des Zwischenquerträgers (16) befestigt sind, und zwar eine von ihnen an der Spitze des Endes (29) und die andere an einem Element (23) des Pfostens (13).

13. Verfahren nach Anspruch 11 oder 12, **dadurch gekennzeichnet, dass** die Pfosten (13) einen I-förmigen oder einen H-förmigen Querschnitt aufweisen und aus zwei Seitenelementen (22) und einem Zwischenelement (23) bestehen; wobei das Zwischenelement (23) mindestens entweder am oberen oder am unteren Ende (14, 15) von den Seitenelementen (22) hervorsteht, um einen Fortsatz (24) zu bilden, der in eine Nut (20) im oberen oder unteren Querträger eingreift.

14. Baustruktur (6), die nach dem Verfahren nach einem der vorstehenden Ansprüche erhalten wurde und aufweist:
a) ein Gerüst (7);
b) ein ausgehärtetes leichtes Konglomerat, in dem das Gerüst (7) vergossen ist;
**dadurch gekennzeichnet, dass** das ausgehärtete leichte Konglomerat aufweist:
a) ein körniges inertes mineralisches Material, aufweisend mindestens einen Bestandteil aus der Gruppe bestehend aus:
• expandiertem Perlit,
• expandiertem Vermiculit,
• Bimsstein,
b) Lehm;
c) ein hydraulischen Kalk aufweisendes Bindemittel;
d) Pflanzenfasern, die ein hygroskopisches Material aufweisen;
und dadurch, dass das Material von mindestens einigen Teilen des Gerüsts (7) Holz ist.

15. Struktur nach Anspruch 14, **dadurch gekennzeichnet, dass** das Gerüst (7) ein Netzwerk (8) aus Pfosten und Querträgern aus Holz aufweist.

16. Struktur nach Anspruch 15, **dadurch gekennzeichnet, dass** an ihren Stirnseiten keine Holzplatten vorhanden sind.

## Revendications

1. Procédé pour faire une structure de construction (6), le procédé comprenant les étapes :
a) prévoir un logement (5) qui est ouvert en haut ;
b) monter une ossature (7) à l'intérieur dudit logement (5) ;
c) verser un conglomérat léger (4) dans ledit logement (5) de manière à enfouir ladite ossature (7) ;
d) laisser ledit conglomérat léger (4) durcir ;
**caractérisé en ce que** ledit conglomérat léger (4) est obtenu en mélangeant de l'eau avec un agrégat comprenant :
a) un matériau minéral inerte granulaire comprenant au moins un composant dans le groupe consistant en :
• perlite expansée,
• vermiculite expansée,
• pierre ponce,
• argile ;
b) un liant comprenant de la chaux hydraulique ;
c) des fibres végétales comprenant un matériau hygroscopique ;
et **en ce que** le matériau de quelques parties au moins de ladite ossature (7) est du bois ; ledit agrégat ayant la composition en poids suivante :
• de 25,5 % à 34,5 % dudit matériau minéral inerte ;
• de 42,5 % à 57,5 % dudit liant ;
• de 8,5 % à 11,5 % desdites fibres végétales ;
• de 8,5 % à 11,5 % d'additifs.

2. Procédé selon la revendication 1, **caractérisé en ce que** ledit matériau inerte est défini par de la perlite expansée.

3. Procédé selon la revendication 1 ou 2, **caractérisé en ce que** ledit liant est défini par un mélange de chaux hydraulique et de ciment.

4. Procédé selon l'une quelconque des revendications précédentes, **caractérisé en ce que** ledit liant comprend de la chaux hydraulique naturelle.

5. Procédé selon l'une quelconque des revendications précédentes, **caractérisé en ce que** lesdites fibres végétales comprennent au moins un composant dans le groupe consistant en :
a) cellulose ;
b) jute :
c) kénaf;
d) chanvre.

6. Procédé selon la revendication 5, **caractérisé en ce que** lesdites fibres végétales consistent en un mélange de :
a) poussière ou fragments de bois ;
b) fibres de jute, kénaf et/ou chanvre.

7. Procédé selon l'une quelconque des revendications précédentes, **caractérisé en ce que** ladite ossature (7) comprend un réseau (8) de montants et de poutres en bois.

8. Procédé selon la revendication 7, **caractérisé en ce que** ledit logement (5) est défini par un coffrage (1) qui est enlevé après que ledit conglomérat léger (4) a durci.

9. Procédé selon la revendication 8, **caractérisé en ce que** ladite ossature (7) comprend en outre au moins une grille verticale (8a), qui est disposée entre ledit réseau (8) et une paroi dudit coffrage (1) avant que le conglomérat léger (4) ne soit versé.

10. Procédé selon la revendication 9, **caractérisé en ce que** ladite grille est définie par un panneau de carton en nid d'abeille.

11. Procédé selon l'une quelconque des revendications 8 à 10, **caractérisé en ce que** ledit réseau (8) comprend :
a) une poutre inférieure (11) et une poutre supérieure (12) ;
b) au moins deux montants (13) comprenant des extrémités inférieure et supérieure respectives qui sont fixées auxdites poutres inférieure et supérieure (11, 12).
c) au moins un organe transversal intermédiaire (16) disposé à une hauteur intermédiaire entre lesdites poutres inférieure et supérieure (11, 12) et ayant deux extrémités latérales opposées (29) qui sont fixées à des parties intermédiaires desdits montants (13).

12. Procédé selon la revendication 11, **caractérisé en ce que** l'une au moins desdites extrémités latérales (29), avant d'être fixée, est reliée au montant correspondant à l'aide d'un dispositif de retenue (30) consistant en deux plaques métalliques (31) qui sont identiques l'une à l'autre et sont fixées l'une au bout de ladite extrémité (29) et l'autre à un élément (23) dudit montant (13), avec des orientations tournées de 180° l'une par rapport à l'autre autour de l'axe dudit organe transversal intermédiaire (16).

13. Procédé selon la revendication 11 ou 12, **caractérisé en ce que** lesdits montants (13) ont une section transversale en forme de I ou en forme de H et consistent chacun en deux éléments latéraux (22) et un élément intermédiaire (23) ; à l'une au moins desdites extrémités supérieure et inférieure (14, 15), ledit élément intermédiaire (23) dépasse par rapport auxdits éléments latéraux (22) de manière à former un appendice (24) qui vient en prise avec une rainure (20) dans ledit organe transversal supérieur ou inférieur.

14. Structure de construction (6) obtenue selon le procédé tel que revendiqué dans l'une quelconque des revendications précédentes et comprenant :
a) une ossature (7) ;
b) un conglomérat léger durci dans lequel ladite ossature (7) est enfouie ;
**caractérisée en ce que** ledit conglomérat léger durci comprend :
a) un matériau minéral inerte granulaire comprenant au moins un composant dans le groupe consistant en :
• perlite expansée,
• vermiculite expansée,
• pierre ponce ,
b) argile ;
c) un liant comprenant de la chaux hydraulique ;
d) des fibres végétales comprenant un matériau hygroscopique ;
et **en ce que** le matériau d'une partie au moins des composants de ladite ossature (7) est du bois.

15. Structure selon la revendication 14, **caractérisée en ce que** ladite ossature (7) comprend un réseau (8) de montants et de poutres en bois.

16. Structure selon la revendication 15, **caractérisée en ce qu'**il n'y a pas de panneaux en bois sur ses faces.
